Europäisches Patentamt

European Patent Office

Office européen des brevets

(11) Publication number: **0 345 042**
A2

# (12) EUROPEAN PATENT APPLICATION

(21) Application number: **89305485.8**

(51) Int. Cl.⁴: **B 01 D 19/04**

(22) Date of filing: **31.05.89**

(30) Priority: **02.06.88 GB 8813018**

(43) Date of publication of application:
**06.12.89 Bulletin 89/49**

(84) Designated Contracting States:
**AT BE CH DE ES FR GB GR IT LI LU NL SE**

(71) Applicant: **EXXON CHEMICAL PATENTS INC.**
**200 Park Avenue**
**Florham Park New Jersey 07932 (US)**

(72) Inventor: **Reed, Kenneth Gordon**
**Steenweg OP Leuven 65**
**B-1980 Tervuren (BE)**

**Godwin, Allen David**
**Avenue de l'Orangerie 9**
**B-1410 Waterloo (BE)**

**Gelregat, Nancy Madeleine Michele**
**Kappellestraat 110 B1**
**B-9800 Deinze (BE)**

**Hentges, Steven George**
**1012 Stoneleigh Drive**
**Baton Rouge Louisiana 70808 (US)**

(74) Representative: **Bawden, Peter Charles et al**
**EXXON CHEMICAL LIMITED EXXON CHEMICAL**
**TECHNOLOGY CENTRE PO Box 1**
**Abingdon Oxfordshire OX13 6BB (GB)**

(54) **Defoamers and their use.**

(57) Finely divided polyethylene waxes having terminal acetyl groups are effective defoamers which may be used both for defoaming and antifoaming. For this purpose they are formulated as liquid compositions comprising a suspension of the wax in an organic liquid containing appropriate surfactants and may be used as emulsions or solutions in hydrocarbon solvents.

EP 0 345 042 A2

**Description**

# DEFOAMERS AND THEIR USE

This invention relates to defoamers and to their production and use.

Defoamers are used in a wide variety of industries. They function both as antifoamers, to prevent build-up of foam, and as defoamers to destroy foams which have already formed. They are also used as de-aerating agents to accelerate the escape of entrapped air. The term "defoamer" is used to cover materials which have either antifoaming or defoaming efficiency or both. When used in "antifoaming", i.e. to prevent foam formation, the defoamer is added to the liquid which is liable to foam before any foam formation takes place. The efficiency of a defoamer in this context is measured by its effectiveness in preventing or minimising foam formation. The term "defoaming" refers to the ability of a defoamer which shows good antifoaming activity may be expected to show also good defoaming activity, this is by no means always the case, and a defoamer may be a good antifoaming agent or a good defoaming agent without also being respectively a good defoaming agent or a good antifoaming agent.

Known defoamers may be supplied as solutions, suspensions, emulsions or as solids. The most effective and widely-used defoamers are however suspensions of finely-divided solid particles dispersed in an organic, often hydrocarbon, medium although there is a trend to use emulsion based products to avoid the environmental problems associated with the use of the hydrocarbon medium.

Defoamers based on suspensions of finely-divided ethylene bis-stearmide particles in an organic medium are very widely used in paper-pulp processing, and paper manufacture. Such defoamers generally consist of a suspension of finely-divided ethylene bis-stearmide particles in a hydrocarbon medium which has dissolved therein one or more surfactants which act as emulsifying and spreading agents. These compositions are effective in a wide variety of circumstances, but ethylene bis-stearmide is an expensive material and there is a need for cheaper defoamers. Indeed, in some cases it is preferable to use a relatively large quantity of a cheap, relatively inactive defoamer rather than a small quantity of an expensive but highly active defoamer, even though the overall cost may be approximately the same, because in many instances it is easier to control the use of relatively large amounts of defoamer rather than small amounts which must be accurately measured.

The present invention is based on the discovery that polyethylene waxes having terminal acetyl groups are very effective defoamers. When correctly formulated, they are in many contexts as effective as ethylene bis-stearamide, with the important advantage that they are much cheaper; they may also be used in emulsion based defoamer systems. The use of these waxes enables emulsion defoamers in which the wax is the only active defoamer component unlike previous wax based emulsion defoamers which generally contain additional active defoamer material.

The present invention accordingly provides a method for suppressing or preventing foam which comprises adding to a foamed or foamable liquid an effective amount of a finely-divided polyethylene wax having terminal -COCH$_3$ groups and containing 50-400 carbon atoms per molecule.

Such polyethylene waxes are normally supplied and used in the form of a liquid defoamer composition comprising a suspension of the finely-divided solid polyethylene wax in an organic liquid carrier, e.g. a petroleum or other hydrocarbon oil or a fluid synthesised by the oxo-process, which has dissolved therein one or more surfactants effective as emulsifying and spreading agents.

The solid polyethylene waxes used in the present invention are known materials which are described for example in United States Patent No. 4698450. They are made by the polymerisation of ethylene in the presence of acetaldehyde as chain transfer agent in the way described in the said patent. A variety of grades of such waxes are commercially available having molecular weights ranging from about 800 to about 5,000, and a blend of such waxes may also be used. The defoamer compositions of the present invention usually contain 1 to 15% by weight of the wax.

The carrier used in the new defoaming compositions may be a hydrocarbon carrier similar to those used in known defoaming compositions. This may be, for example, a light mineral oil, or a so-called spindle oil. Suitable mineral oils may have a viscosity of about 20 cSt at 40°C. Preferably, however, the carrier used in the present invention is an organic fluid obtained by the oxo-process, and more particularly a mixture of higher (i.e. C$_{16}$ to C$_{22}$) aliphatic ethers and ether-alcohols, usually associated with a small proportion of corresponding alcohols of mainly 8 to 11 carbons such as isodecanol, and a small proportion of less volatile compounds. Such materials are commercially available, e.g. the product known as MD-OC-H supplied by Exxon Chemicals. This product consists mainly (over 80%) of aliphatic ethers and ether-alcohols in which the carbon chains contain 20 to 22 carbon atoms. A small proportion (less than 10%) of alcohols containing 9 to 11 carbon atoms is also present. It has been found that these materials are superior to hydrocarbons as carriers in the defoamer compositions of the present invention. The combination of the defoamer and the oxo-process oil is particularly desireable when the defoamer is used as an emulsion since the emulsion has low viscosity and may be more readily used than other water-based defoamers.

The surfactants used in the new compositions may be similar to those used in known defoamers, and especially anionic surfactants, non-ionic surfactants or a mixture of both. Suitable anionic surfactants include the sulphonates of aromatic hydrocarbons and the sulphates of long chain aliphatic alcohols which may be polyoxyethylenated. Suitable non-ionic surfactants include polyoxyethylenated long chain aliphatic esters of polyethylene glycols of high molecular weight, e.g. 200 to 800.

The new defoamer compositions are conveniently made by mixing the specified ingredients. Preferably, the ketonic polyethylene is dissolved in the carrier at elevated temperature and the homogeneous mixture is then quickly cooled, e.g. to 0°C. This causes the ketonic polyethylene to precipitate out in the form of solid particles of the required particle size. Such compositions have, however, sometimes an inadequate shelf-life for some purposes. Shelf-life can be substantially improved, and the defoaming activity often increased, by homogenising the mixture. The usual industrial equipment may be used for this purpose, e.g. a Gaulin homogeniser, using a pressure of, e.g., 500 bars. During the homogenisation, the temperature of the mixtures typically reaches about 35°C.

The surfactants are preferably dissolved in the carrier before the ketonic polyethylene is added, but may, if desired, be added later.

The new defoamer composition may contain, in addition to the ingredients already mentioned, a small proportion of other constituents as used in known defoamers, e.g. finely-divided hydrophobised silica and/or a silicone oil. Such additives tend however to increase the overall cost of the defoamer composition and are not therefore desirable where cost is a prime consideration, e.g. in large-scale uses.

Although the preferred compositions in accordance with the invention consist of the ketonic polyethylene dispersed in an organic carrier, it is possible to make an oil-in-water or water-in-oil emulsion defoamer in which the finely-divided ketonic polyethylene and the organic carrier are dispersed in water or water is dispersed in the organic carrier. Oil-in-water emulsions can be advantageous where the defoamer is to be substantially diluted before use since for environmental and cost reasons water is the preferred diluent. The ketonic polymer may be the only particulate defoamer in those systems which are efficient, stable, of long life and low viscosity.

In the following examples, the particulate active defoamer may be any one of the following ketonic polyethylene waxes:

|  | ECEA-1 | ECEA-2 | ECEA-3 | ECEA-4 |
|---|---|---|---|---|
| Molecular weight | 800 | 4850 | 1100 | 1100 |
| Carbon chain length | 52 | 350 | 78 | 78 |
| Density (g/ml) | * | 0.948 | 0.950 | 0.950 |
| Vicat softening point ) ASTM D1525 (°C) ) | * | 102 | 65 | 68 |
| Ring & ball softening ) point, ASTM E 28 (°C) ) | * | 119 | 115 | 112 |
| Viscosity at 121°C, ASTM D 3236 ) (mPa.S) ) | * | 1200 | 27 | 27 |

* ECEA-1 is a paste at room temperature

ECEA-3 is similar to ECEA-4 but is manufactured to higher specifications than ECEA-4 and therefore gives greater reproducibility of results.

Other ketonic polyethylene waxes could be substituted for these materials.

The following examples illustrate the invention:

## EXAMPLE 1

| Component | Amount (wt%) |
|---|---|
| Particulate active defoamer | 2.5 |
| Polyethyleneglycol 400 dioleate | 5.0 |
| Acropol 35/7 ethylene oxide | 5.0 |
| Carrier | 87.5 |

Acropol 35/7 is a $C_{13-15}$ branched chain alcohol polyoxyethylenated with 7 molecular proportions of ethylene oxide.

All the components were heated together with slow stirring until a homogeneous solution was obtained. The mixture was then cooled in an ice-bath and left without stirring until the temperature was about 10°C. The mixture was allowed to warm to room temperature before use.

With all the particulate active ingredients tested, formulations efficient with respect to both antifoaming and defoaming were prepared. In almost all cases, formulations in which the carrier was MD-OC-H performed better than equivalent formulations in which Stanco 90 (a hydrocarbon oil) was the carrier.

Defoaming efficiency could be improved by adding 0.1 wt% of a silicone oil to the formulation, but the same silicone oil had an adverse effect on antifoaming efficiency.

Homogenisation improved the efficiency and shelf life of the formulation in almost every case.

## EXAMPLE 2

### COMPOSITION

| Component | Amount (wt%) |
|---|---|
| A Carrier | 2.5 |
| A Particulate active defoamer | 2.5 |
| A Plexol 956 | 2.0 |
| B Carrier | 23.0 |
| C Carrier | 11.0 |
| C Hydrophobic silica in oil | 8.0 |
| C Acropol 35/7 ethylene oxide | 1.5 |
| C Water | 49.4 |
| D Silicone oil F 111/500 | 0.1 |

Plexol 956 is a metallic salt of a sulphonated aromatic hydrocarbon used as a dispersing agent.

All the "A" components were heated together until melted and dissolved. The mixture was kept molten for 15 minutes, and then added in the molten state to "B" which had been cooled in an ice-bath to about 5°C, with vigorous stirring. The "C" components were then added separately to "A + B" with stirring, adding the water last. The mixture was homogenised at 25°C. Component "D" was added to components "A + B + C" with stirring for 15 minutes. The product is a water-in-oil emulsion.

This formulation using MD-OC-H as carrier and ECEA-1 as the particulate active ingredient showed good antifoaming efficiency, and a shelf life in excess of 43 days.

Homogenising the formulation gave only a slight improvement in initial efficiency and in shelf life. The benefit of homogenisation is in this case only marginal.

4

EP 0 345 042 A2

EXAMPLE 3

COMPOSITION

| Component | Amount (wt%) |
|---|---|
| Particulate active ingredient | 6.0 |
| Witcolate 35/30 | 1.0 |
| Silcolapse 430 | 0.5 |
| Nonylphenol/8 ethylene oxide | 5.0 |
| Exxsol D 100 S | 5.5 |
| Carrier | 82.0 |

Witcolate 35/30 is a 30% solution in water of the sodium salt of the sulphate of $C_{13-15}$ branched chain alcohol polyoxyethylenated with 3 molecular proportions of ethylene oxide.

Silcolapse 430 is a silicone-based anti-foaming compound.

Exxsol D100S is a hydrocarbon oil complying with BGA requirements.

All the ingredients except the nonylphenol/ethylene oxide condensate and the Exxsol D 100 S were mixed. This mixture was homogenised, then heated to 60°C and cooled quickly to room temperature. The nonylphenol/ethylene oxide condensate was added with stirring and the viscosity checked. Lastly, the Exxsol D 100 S was added with stirring.

All defoamers based on this formulation were prepared by the standard method but without homogenisation. It is likely that some of the poor results obtained when using Stanco 90 as the carrier would have been improved by homogenisation. Excellent results were obtained without homogenisation when using MD-OC-H as the carrier, as shown below:

Antifoaming effects

| Carrier | Particulate active | Initial Antifoam- ing | Shelf life, Good perfor- mance (days) |
|---------|--------------------|-----------------------|----------------------------------------|
| Stanco 90 | ECEA-1 | Poor/Poor | <1 |
| Stanco 90 | ECEA-2 | Medium/ poor | <1 |
| Stanco 90 | ECEA-3 | Poor/poor | <1 |
| MD-OC-H | ECEA-1 | Poor/good | 49+ |
| MD-OC-H | ECEA-2 | Poor/good | NA |
| MD-OC-H | ECEA-3 | Good/good | 46+ |

Defoaming Effects

| Carrier | Particulate active | Initial Defoaming | Shelf life, Good defoaming (days) |
|---------|--------------------|-------------------|-----------------------------------|
| Stanco 90 | ECEA-1 | Medium/ medium | <1 |
| Stanco 90 | ECEA-2 | Medium/ poor | <1 |
| Stanco 90 | ECEA-3 | Medium/ medium | <1 |
| MD-OC-H | ECEA-1 | N/A | 17+ (G/G) |
| MD-OC-H | ECEA-3 | Good/good | 22+ (G/G) |

Antifoaming code :

Poor - >5 cm foam formed in 3 minutes

Medium - 1 <x ≦5cm foam formed in 3 minutes

Good - <1 cm foam formed in 3 minutes

Defoaming code :

Poor - <20 cm foam collapsed in 3 minutes

Medium - 20 <x ≦ 30 cm foam collapsed in 3 minutes

Good - >30 cm foam collapsed in 3 minutes

The use of MD-OC-H in place of Stanco 90 enabled defoamer formulations efficient with respect to both antifoaming and defoaming to be prepared without homogenisation.

EXAMPLE 4

COMPOSITION

| Component | Amount (wt%) |
|---|---|
| 1. Carrier | 10 |
| 2. Particulate active defoamer | 40 |
| 3. Hexylene glycol | 2 |
| 3. Butyl cellosolve | 3 |
| 3. Dowanol DPM | 5 |
| 4. Water | 35.5 |
| 5. Diethanolamine | 1.5 |
| 6. Isopropanol | 3 |

Dowanol DPM is dipropylene glycol monomethyl ether.

Components "1", "2" and "3" were heated together with mixing until a homogeneous melt was formed. Warm component "4" at about 32°C was added slowly to "1+2+3" with vigorous mixing. Component "5" was added to "1+2+3+4" and the mixture was heated to about 35°C while stirring. The resulting mixture was cooled to below 30°C, component "6" was added and mixed well in to give a hazy, amber microemulsion.

The use of ECEA-1 as the defoamer together with MD-OC-H as carrier produced a heterogeneous defoamer with excellent antifoaming properties.

The results were:

Antifoaming efficiency

| Carrier | MD-OC-H |
|---|---|
| Particulate active | ECEA-1 |
| Antifoaming efficiency - time to generate 45 cm of foam | No foam at all after 3 minutes |

**Claims**

1. A method of suppressing or preventing foam which comprises adding to a foamed or foamable liquid an effective amount of a finely divided polyethylene wax having terminal -COCH$_3$ groups and containing 50-400 carbon atoms per molecule.

2. A liquid defoamer composition comprising a suspension of a finely divided polyethylene wax having terminal -COCH$_3$ groups and containing 50-400 carbon atoms per molecule in an organic liquid carrier which has dissolved therein one or more surfactants effective as emulsifying and spreading agents.

3. A composition according to claim 2 in which the said polyethylene wax has been made by polymerization of ethylene in the presence of acetaldehyde as chain transfer agent.

4. A composition according to claim 2 or 3 in which the carrier is a mixture of C$_{16-22}$ aliphatic ethers and ether-alcohols, optionally associated with a minor proportion of corresponding alcohols of 8 to 11 carbon atoms.

5. A composition according to any one of claims 2 to 4 in which the surfactants are non-ionic or anionic surfactants or both.

6. A composition according to any one of claims 2 to 5 which also contains hydrophobized silica as an additional defoamer.

7. A composition according to any one of claims 2 to 6 containing 1 to 15% by weight of the said polyethylene wax.

8. A composition according to any one of claims 2 to 7 which has been homogenized.

9. A composition according to any one of claims 2 to 8 in which the composition is an aqueous emulsion.

10. A composition according to claim 10 in which the polyethylene wax is the only active defoamer present.

11. A composition according to claim 2 substantially as described in any one of the foregoing Examples.

12. A method according to claim 1 in which the polyethylene wax is used in the form of a composition according to any one of claims 1 to 11.